# EUROPEAN PATENT APPLICATION

(11) **EP 1 197 886 A1**
(43) Date of publication of application: **17.04.2002**
(21) Application number: 00810943.1
(22) Date of filing: 12.10.2000
(51) Int. Cl.: G06F 17/40

(54) **Asset information exchange**

(71) Applicant: ABB RESEARCH LTD., 8050 Zürich (CH)
(72) Inventor: Vetter, Claus, 5405 Baden-Dättwil (CH); Kostic, Tatjana, 5443 Niederrohrdorf (CH); Werner, Thomas, 5404 Baden-Dättwill (CH)
(74) Representative: ABB Patent Attorneys

(57) **Abstract**

A computer system and method for exchanging asset information, wherein a common, centralized asset information document (4) containing information associated with assets (2) of a technical facility or plant (1) is maintained. The information is represented by plain text, structured as a plurality of sections, each containing a plurality of subsections, where each section corresponds to one of the assets (2) and each subsection corresponds to one of a plurality of application programs (3). Each application program (3) may write information to and read information from the document (4). The asset information document (4) thus provides a unified access to relevant asset information.

In a preferred embodiment of the invention, the information is expressed using the well known extended markup language (XML) standard. This allows to use established standards for defining the document structure.

## Description

### Field of the Invention

The invention relates to the field of asset management, in particular to a computer system and a method for exchanging asset information as described in the preamble of claim 1 and 7, respectively.

### Background of the Invention

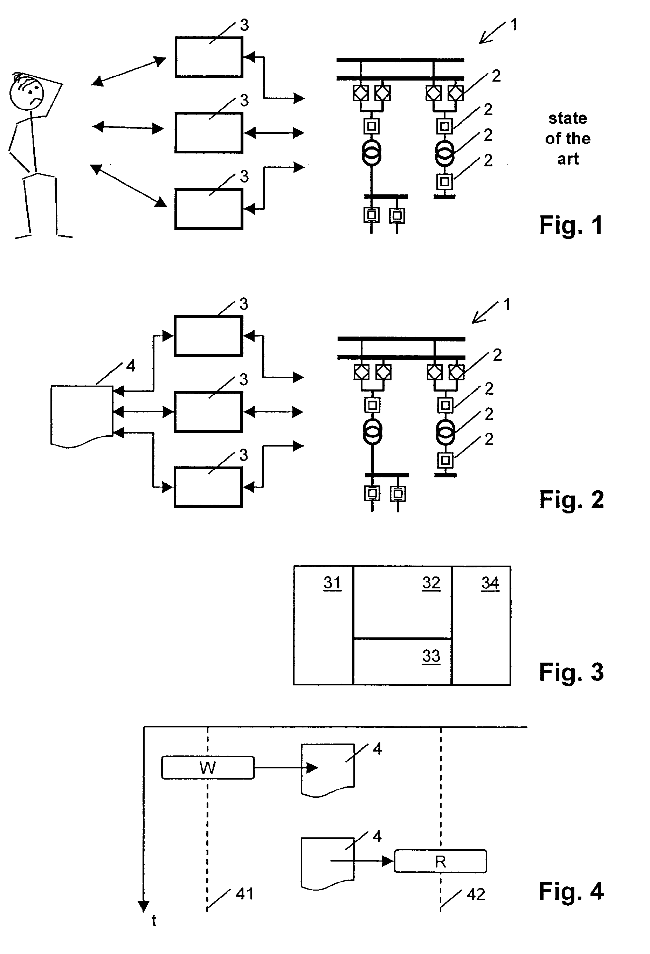

Asset management is the process whereby an organization collects and maintains a comprehensive list of the items it owns such as hardware and software. Asset management guides the acquisition, use and disposal of assets to make the most of their future economic benefit and to manage related risks and costs over their entire life. For technical systems, asset management takes into account measured process data in order to assess the state of an asset, expected failures and total lifetime. For electrical substations such assets are transformers, switches and circuit breakers and the associated monitoring, measurement, control and communication systems. These control and communication systems are implemented as a number of computer programs or applications, each providing different aspects of information about the assets, and each application program having its own programming interface and its own user interfaces. Figure 1 schematically shows a structure of a number of assets 2 comprising a plant or facility 1, together with the associated applications 3. In the case of an electrical substation or a power utility, such applications are, for example,
■ substation control,
■ control, protection and monitoring systems for the individual assets,
■ supervisory control and date acquisition (SCADA) and energy management (EMS) systems for online and realtime management, operation and optimization of distribution and transmission systems relying on SCADA data, and
■ business Systems for processing financial information and/or for maintenance and work order planning.

Each asset is associated with at least one application, and each application is associated with at least one asset. It clearly is desirable to combine information related to a specific asset but maintained in different applications, in order to get a complete picture of the state of the asset. This is often done by having the user combine information from different sources and drawing conclusions without further computer assistance or by ad hoc programming of dedicated data exchange interfaces between applications,.

A system for combining asset information from different sources is described in US-A-6 006 171. It combines data from computerized maintenance management systems (CMMS) and from process control software. CMMS are tools for planning and scheduling equipment maintenance and asset management to meet the needs of modern plants and facilities. Using information about system components, CMMS software schedules maintenance, repairs, and inspections of such components. CMMS software notifies operations personnel when maintenance or other action is required.

Process control software is used in plants and other facilities to monitor, record, and control process conditions. Process control software uses process variables to model system processes. Process control software may obtain process variable data through a number of means including manual input, sensor input, and interpolation and extrapolation from previous data. A process variable may, for example, obtain temperatures from a temperature sensor.
However, the combination of the CMMS and process control applications requires the establishment of common Application Programmer Interfaces (APIs). For more than two systems, the number of such interfaces increases rapidly, making this approach based on individual interfaces impractical.

### Description of the Invention

It is therefore an object of the invention to create a computer system and a method for exchanging asset information of the type mentioned initially, which overcomes the disadvantages mentioned above.

These objects are achieved by a computer system and a method for exchanging asset information according to the claims 1 and 7.

In the inventive computer system and method for exchanging asset information concerning assets that are technical devices or systems, a common, centralized asset information document containing information associated with one or more asset is maintained. The information is represented by plain text, structured as a plurality of sections, each containing a plurality of subsections, where each section corresponds to one of the assets and each subsection corresponds to one of a plurality of application programs associated with the asset. Each application program may write information to and read information from the document.

The asset information document thus provides a unified access to relevant asset information. A main advantage is that the document is easily extended when information from a new application needs to be incorporated.

In a preferred embodiment of the invention, the information is expressed using the well known extended markup language (XML) standard. This allows to use established standards for defining the document structure. A further advantage is that it allows access to the document through internet protocols such as the hypertext transmission protocol (HTTP). A yet further advantage is that the document is immediately readable by a human reader using an arbitrary web browser or even only a text editor.

Further preferred embodiments are evident from the dependent patent claims.

### Brief Description of the Drawings

The subject matter of the invention will be explained in more detail in the following text with reference to preferred exemplary embodiments which are illustrated in the attached drawings, in which:
- Figure 1: schematically shows a structure of a substation and associated applications according to the state of the art;
- Figure 2: schematically shows the structure of a substation, associated applications and an asset information document according to the invention;
- Figure 3: schematically shows the internal structure of an application; and
- Figure 4: shows an interaction diagram representing the inventive method.

The reference symbols used in the drawings, and their meanings, are listed in summary form in the list of reference symbols. In principle, identical parts are provided with the same reference symbols in the figures.

### Detailed Description of Preferred Embodiments

Figure 2 schematically shows the structure of a plant or facility, in this case a substation 1, with assets 2, associated application programs 3, also referred to as applications 3, and a machine readable, centralized asset information document 4 according to the invention. Assets 2 are, for example, transformers, switches and disconnectors. Certain applications 3 such as substation control are associated with and maintain information related to a plurality of assets 2. Other applications such as transformer monitoring or control of a switch are associated with only a single asset.

Figure 3 schematically shows the internal structure of an application 3. An application front end 31 communicates with one or more assets 2. Business objects 32 are objects in the sense of object-oriented programming. They contain methods for processing and providing asset data. An application database 33 stores application specific data such as time histories of measurements and events. An application programming interface (API) 34 provides an interface to the asset information document 4.

The invention is implemented in a computer system comprising one or more computers, having storage means for storing the asset information document 4 in machine readable form, and means for executing the applications 3 or for communicating with the applications 3.

According to the invention, each application 3 is a computer program or program element and writes information associated with the assets 2 into the asset information document 4 stored in computer memory. The document 4 is a text document, preferably containing text in ASCII format. The document 4 is structured as a plurality of sections, each containing a plurality of subsections. Each section corresponds to one of the assets 2 and each subsection corresponds to one of the applications 3. The system is configured to allow each application 3 to write information to and to read information from the document 4. The associated method according to the invention is shown in an interaction diagram in Figure 4. Activities executed by a first and a second application are shown along dotted lines 41 and 42, respectively, parallel to a common time axis t. In a first step W the first application writes information to the document 4, and in a later, second step R a second application reads said information from the document 4. Executing the inventive method repeatedly amounts to a plurality of applications writing to and reading from the document 4.

In a preferred embodiment of the invention, the computer system is configured to allow at least one of the applications 3 to write information only into those subsections of the document 4 that are associated with the at least one application 3.

The information represented in the asset information document 4 preferably describes a characteristic of an asset, such as a switching state, transformer temperature, scheduled maintenance date, etc. In another preferred embodiment of the invention, the information, when appropriate, specifies a link such as a uniform resource locator (URL) to another document or application. An application 3 or a browser under control of a user follows the link to find associated data or procedures of a further application program which, when invoked, return associated data.

The invention provides the advantage to the user that all relevant data of an asset is stored in a central location and is immediately accessible, with no need to access each application 3 through a proprietary user interface. New applications 3 can be installed without affecting existing ones, since only new subsections in the asset information document 4 need to be inserted. Data exchange between applications 3 is achieved through the asset information document 4.

In a further preferred embodiment of the invention, the asset information document 4 is structured according to a syntax defined by an extended markup language (XML) or related standard. This allows to use existing mechanisms and standards to update the asset information document 4 via an internet protocol. Access to the content of an XML document is given through a document object model (DOM) standard, which specifies a standard application programming interface to client applications accessing the information stored within the XML document that is independent of the programming environment or language.

Access to asset data that is not stored in the asset information document 4 itself is provided by a so-called asset document data adapter. The data adapter defines, in a standardazed manner, how a client application is to retrieve asset data from a data server application. For example, the data adapter specifies a network address or location of a database and a SQL query, which, when passed to the database, provides the asset data. In another example, the data adapter is a URL that specifies a asset data file and possibly a location within the asset data file containing the asset data. In yet another example, the data adapter is a URL that specifies a host computer and includes commands that, when passed to the host computer, cause it to return the asset data. In yet another examplt, the data adapter specifies a function call and parameters that are to be passed to an API of a data server application.

In this way, the invention allows to have a transparent access to data that is either provided in the asset information document 4 itself or by other documents or data server applications or systems. The XML asset information document 4 hides these different access methods and provides one coherent method for client applications to access the data, by redirecting data requests to individual data server applications where the data is actually stored, in the case that the data is not stored within the asset information document 4 itself.

An example structure of an XML asset information document 4 describing an electrical substation is given below. Parts of the document denoted by ellipsis ("...") are omitted for clarity.

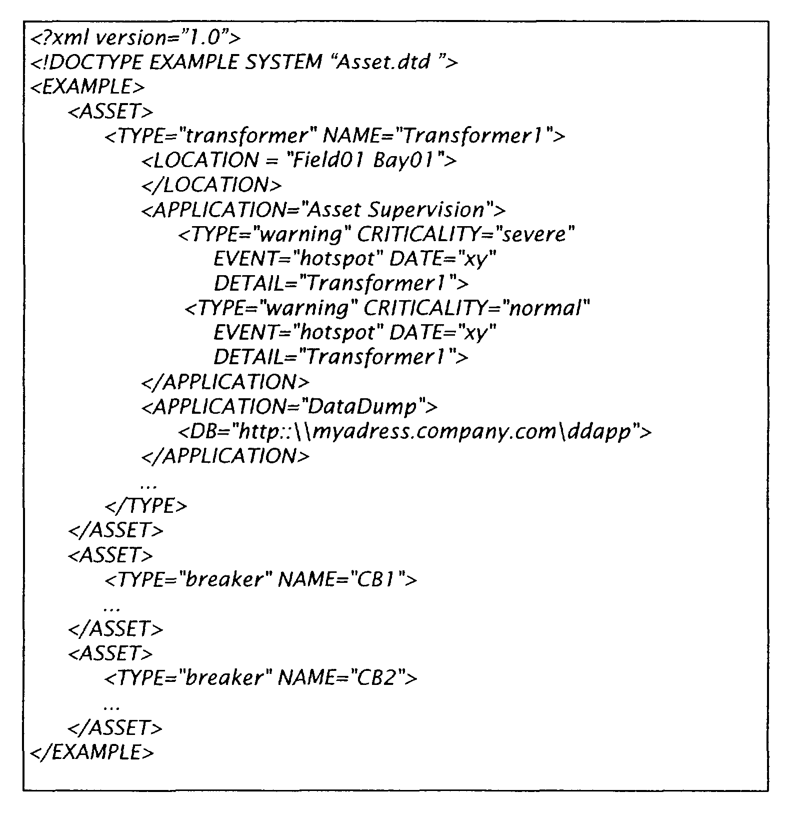

The line beginning with <!DOCTYPE specifies an external document type definition (DTD) document, which defines and is used to check the document's syntax. The text between <ASSET> and </ASSET> tags is a section corresponding to a given asset. The text between <APPLICATION...> and </APPLICATION> tags is a subsection corresponding to a given application.

The example documtent contains information about assets "Transformer1" and of "CB1". The transformer is associated with applications "Supervision" and "DataDump". The application "Supervision" has a number of data items associated with the asset "Transformer1" and stored in the asset information document 4: In the example, these data items describe the status of warnings about hot spots inside the transformer.

The application "DataDump " does not have a number of data items stored in the asset information document 4, but instead a URL is given (*http::\\myadress.company.com\ddapp*), which specifies the location of a document or a further application which provide further information related to the application "DataDump".

At a given time, the asset information document 4 contains the text as given in the example. Let it become necessary to integrate a new application into the system. The new application maintains topology data. The DTD document is updated with regard to syntax rules specifying the expression of topology data within XML. The relevant data is inserted as a new subsection into the asset information document 4. For example, a subsection labeled "Topology Dependencies" is inserted into the XML text of the example asset information document 4, without affecting the existing text.

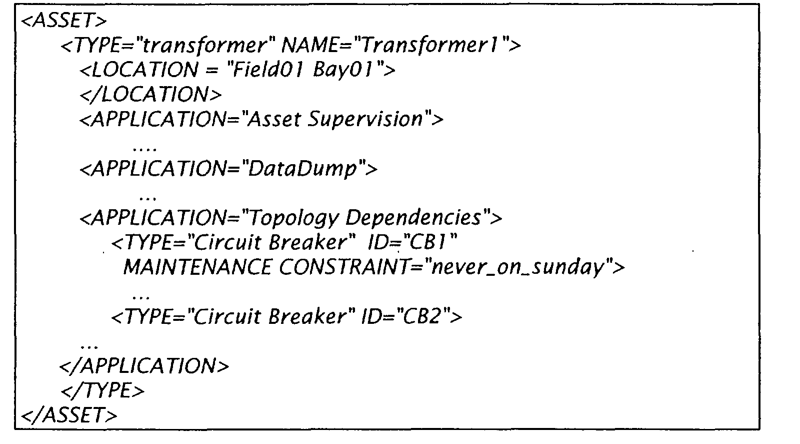

The asset information document 4 does not only provide an information interface between applications 3, but also is in a human-readable form. It is viewable with an arbitrary XML-enabled browser, or even with a simple text editor.

### List of designations

- 1: substation
- 2: asset
- 3: application
- 4: asset information document
- 31: application front end
- 32: business objects
- 33: application database
- 34: application programming interface
- 41: activity line of a first application
- 42: activity line of a second application
- t: time axis
- R: read
- W: write

## Claims

1. A computer system for exchanging asset information among a plurality of application programs (3) that are associated with one or more assets (2), where the assets (2) are technical devices or systems, the computer system comprising storage means for storing information,
**characterized in that** a centralized asset information document (4) containing information associated with the assets (2) is stored in the storage means, the document (4) is a text document and is structured as a plurality of sections, each containing a plurality of subsections, where each section corresponds to one of the assets (2) and each subsection corresponds to one of the application programs (3), and where the system is configured to allow each application program (3) to write information to the document (4) and to read information from the document (4).

2. The computer system of claim 1, **characterized in that** the document (4) is structured according to an extended markup language (XML) standard.

3. The computer system of claim 1, **characterized in that** the information consists of data representing a characteristic of an asset (2).

4. The computer system of claim 1, **characterized in that** the information specifies a link to another document that is stored on a computer data storage means and that contains information associated with at least one asset (2).

5. The computer system of claim 1, **characterized in that** the information specifies a method to access a data server application program that is able to provide information associated with at least one asset (2).

6. The computer system of claim 1, **characterized in that** the system is configured to allow at least one of the plurality of application programs (3) to write information only into those subsections of the document (4) that are associated with the at least one application program (3).

7. A method for exchanging asset information among a plurality of application programs (3) that are associated with one or more assets (2), where the assets (2) are technical devices or systems, the method being executed on a computer system comprising storage means for storing information,
**characterized in that** the method comprises the following steps:
a) a first step in which a first application program writes information to a centralized asset information document (4) which contains information associated with the assets (2), is stored in the storage means, is a text document and is structured as a plurality of sections, each section containing a plurality of subsections, where each section corresponds to one of the assets (2) and each subsection corresponds to one of the application programs (3), and
b) a second step in which a second application program reads said information from the document (4).
